# EUROPÄISCHE PATENTSCHRIFT

(11) **EP 0 621 076 B1**
(45) Veröffentlichungstag und Bekanntmachung des Hinweises auf die Patenterteilung: **29.01.1997**
(21) Anmeldenummer: 94102515.7
(22) Anmeldetag: 19.02.1994
(51) Int. Cl.: B03D 1/14

(54) **Verfahren zur Abtrennung von Feststoffen**
Method for the separation of solids
Procédé pour la séparation de solides

(30) Priorität: 17.04.1993 DE 4312540
(43) Veröffentlichungstag der Anmeldung: 26.10.1994
(73) Patentinhaber: Voith Sulzer Stoffaufbereitung GmbH, 88191 Ravensburg (DE)
(72) Erfinder: Bassler, Wolfgang, D-78476 Allensbach (DE); Gutsmuths, Eckhard, D-88213 Ravensburg (DE); Kleinschnittger, Hans, D-88250 Weingarten (DE); Mannes, Wolfgang, D-89312 Günzburg-Reisensburg (DE)

(56) Entgegenhaltungen:
- EP-A- 0 442 463
- DE-A- 3 529 638
- FR-A- 2 529 476
- FR-A- 2 541 136
- US-A- 4 157 952
- US-A- 5 192 423

## Beschreibung

Die Erfindung bezieht sich auf ein Verfahren zur Abtrennung von Feststoffen aus einer Suspension gemäß Oberbegriff des Anspruchs 1 sowie auf eine Vorrichtung zur Durchführung des Verfahrens.

Verfahren der genannten Art werden verwendet, um aus einer Suspension den größten Teil der darin suspendierten Feststoffteilchen auszuscheiden. Die Zielsetzung hierzu kann entweder die Klärung von verschmutztem Abwasser sein oder auch die Rückgewinnung von noch weiter zu verwendenden Feststoffteilchen in einer Suspension oder aus einer Kombination dieser beiden Forderungen. In den oft vorliegenden Fällen, daß die Menge der suspendierten Feststoffe sehr gering ist, wie z.B. ungefähr 0,1-1 %, ist die Flotation ein hierzu gut geeignetes Verfahren. Bekanntlich wird bei einer Flotation ein die auszuscheidenden Stoffe enthaltender Schaum oder Schwimm-Schlamm gebildet.

Ein typischer Anwendungsfall für die Verwendung eines derartigen Verfahrens ist die Aufbereitung von verschmutzten Wässern in einer Papierfabrik. Diese enthalten nämlich oft eine Restmenge von unerwünschten Feststoffteilchen, die entfernt werden müssen, um das so gereinigte Wasser besser bei der Produktion des Papiers wieder einsetzen zu können. Gerade derartige Verfahren haben es ermöglicht, daß heute ein beträchtlicher Teil des in der Papierfabrik verwendeten Wassers nach der Verwendung nicht mehr in die Kanalisation abgeleitet werden muß, sondern im Kreislauf zurückgeführt werden kann.

Flotationsverfahren haben - ähnlich wie Sinksedimentationsverfahren - die Eigenschaft, daß die zu reinigende Suspension längere Zeit der Behandlung zur Verfügung stehen muß, d.h. also, daß eine relativ lange Verweilzeit zur Durchführung des Verfahrens erforderlich ist. Andererseits müssen in der Regel recht große Wassermengen auf diese Weise aufbereitet werden. Aus diesen beiden Gründen ergibt sich oft das Problem, große Suspensionsmengen gleichmäßig und frei von unerwünschten Wirbeln zu führen. Wenn das nicht gelingt, entstehen ausgesprochen störende Kurzschlußströmungen, die zu einer Verunreinigung des an sich schon gereinigten Wassers führen oder mindestens zu einer unerwünschten Verkürzung der Verweilzeit. Um solche Effektverluste zu vermeiden, wurden in der Vergangenheit recht aufwendige Apparate erstellt. Neben dem Nachteil des hohen Preises solcher Apparate erforderten diese auch eine aufwendige Wartung und verschmutzten leicht.

Der Erfindung lag die Aufgabe zugrunde, ein Verfahren der genannten Art zu schaffen, welches zu seiner Durchführung lediglich einfache Apparate erforderte, die zudem wartungsarm sind. Ferner sollte das Verfahren eine möglichst effektive Abtrennung der suspendierten Feststoffteilchen gestatten.

Diese Aufgaben werden durch die im Kennzeichen des Anspruchs 1 genannten Merkmale gelöst.

In weiteren Ansprüchen werden besonders vorteilhafte Ausführungsformen des Verfahrens sowie Vorrichtungen zur Durchführung des Verfahrens beschrieben.

Durch die in den Ansprüchen genannten Maßnahmen gelingt es, die Suspension gleichmäßig in den zylindrischen Klärraum einzuführen. Dabei heißt gleichmäßig, daß die Geschwindigkeiten an den verschiedenen Stellen eines Strömungsquerschnitts sowohl in ihren Beträgen als auch ihrer Richtung etwa gleichgerichtet sind. Nach Eintritt in den Klärraum erfolgt aufgrund der Anordnung von Zu- und Ablauföffnungen eine zum Zentrum gerichtete Spiralströmung. Wegen der gut gepflegten Einlaufströmung kann der Klärraum selbst in großen Bereichen frei von Einbauten gehalten werden. Derartige Einbauten sind erfahrungsgemäß verschmutzungsempfindlich. Da sich beim erfindungsgemäßen Verfahren eine große, umlaufende, ins Zentrum gerichtete Spiralströmung ausbilden kann, können Strömungs-Totzonen, Wirbel etc. zuverlässig vermieden werden. Auf diese Weise können die Feststoffe direkt ohne turbulenzbedingte Umwege an die Oberfläche aufsteigen. Die Wirkung wird gegenüber bekannten Vorrichtungen sogar noch verbessert.

Als weiterer Vorteil ist zu nennen, daß die Verhinderung von Turbulenzen zusätzlich die Wirkung der eingesetzten Chemikalien verbessert. Bekanntermaßen sind nämlich gerade die in solchen Verfahren aus den verwendeten Chemikalien und Feststoffen entstandenen Flocken scherkraftempfindlich und werden durch die Turbulenzen geschädigt.

Die lediglich noch verbleibenden Einbauten in Apparate zur Durchführung des Verfahrens sind zumeist sehr einfach geformt und können daher leicht gereinigt werden, wozu neben der manuellen auch eine maschinelle Reinigung möglich ist.

Als weiterer Effekt, der sich aus der erfindungsgemäßen Durchführung des Verfahrens ergibt, kann die völlig frei wählbare Umdrehungsgeschwindigkeit und -richtung der Schlammabfuhreinrichtung genannt werden. In vielen bekannten Lösungen wird diese nämlich aus konstruktiven Gründen mit einer umlaufenden Suspensionszugabeeinrichtung verbunden. Dadurch ist aber einer dieser Parameter nicht mehr frei wählbar.

Die durch die Erfindung frei wählbare Umdrehungsgeschwindigkeit der Schlammabfuhreinrichtung begünstigt die Optimierung und erhöht die Betriebssicherheit der Schlammentnahme.

Die Erfindung wird beschrieben und erläutert anhand von Zeichnungen. Dabei zeigen:
- Fig. 1 bis 3: schematisch: Wichtige Verfahrensschritte;
- Fig. 4: schematisch: Eine Flotationsvorrichtung in Aufsicht;
- Fig. 5: schematisch: Eine Flotationsvorrichtung in Seitenansicht, geschnitten;
- Fig. 6: schematisch: Variation des Wasser-Abführ-Bereiches;
- Fig. 7: perspektivisch: Form eines Strömungsgleichrichters;
- Fig. 8: schematisch: Teil einer Flotationsvorrichtung mit Lamellenmodul;
- Fig. 9: Lamellenmodul von Fig. 8, geschnitten.

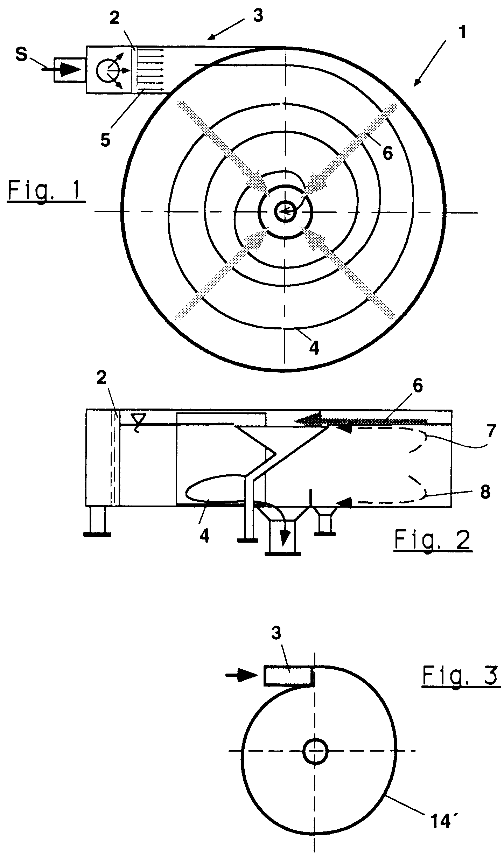

In Fig. 1 sind die wichtigsten Prinzipien des erfindungsgemäßen Verfahrens schematisch dargestellt. Man erkennt, daß die Suspension S über eine Kammer 3 tangential in einen zylindrischen Klärraum 1 eingeleitet wird. Durch strömungstechnische Mittel 2 wird gewährleistet, daß die Strömung bei Einlauf in den Klärraum 1 im wesentlichen gleichgerichtet ist. Sie gelangt dann auf einem spiralförmigen Weg 4 in das Zentrum des Klärraumes. Der sich bildende Flotationsschaum wird an der Oberfläche gesammelt und gelangt, durch 4 Pfeile 6 symbolisch dargestellt, zum Schlammaustrag, der hier im mittleren Bereich des Klärraumes gezeichnet ist. Der Klärraum 1 muß nicht unbedingt kreisrund sein; er kann z.B. durch eine spiralige Form der Strömung angepaßt werden. (Siehe Figur 3).

Fig. 2 zeigt Vorgänge bei Durchführung des Verfahrens in Seitenansicht. Dabei sind zusätzlich die in den Unteransprüchen beschriebenen Trombenströmungen als Pfeile 7 und 8 angedeutet. Sie können den Schlammtransport an der Oberfläche bzw. den Sinkschlammtransport am Boden des Klärraumes begünstigen. In besonderen Fällen könnte sogar eine maschinelle Schlammabführung, wie später beschrieben, entfallen.

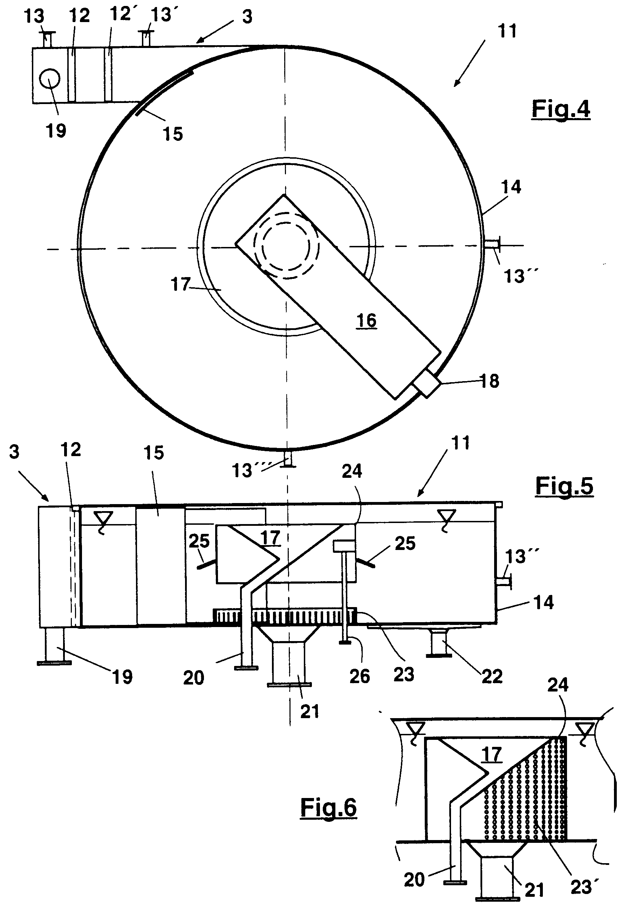

Fig. 4 zeigt die Draufsicht einer Flotationsvorrichtung zur Durchführung des Verfahrens. Sie weist einen Flotationsbehälter 11 auf, dessen seitliche Wand 14 die Form eines Kreiszylinders hat. Die Kammer 3 nimmt die durch den Suspensionseinlauf 19 strömende Suspension auf und führt sie in den Flotationsbehälter. In der Kammer 3 sind hier zwei Strömungsgleichrichter 12 und 12' angebracht.

In der am Suspensionseinlauf 19 eintretenden Flüssigkeit kann die Luft für die Flotation durch Entspannung der Suspension in feinen Blasen vorliegen. Es ist auch möglich, durch weitere Anschlüsse 13, 13', 13'', 13''' Luft oder mit Luft versetztes Wasser zuzuleiten. Auch zur Zugabe von Chemikalien können die Anschlüsse 13, 13', 13'', 13''' dienen.

Die Kammer 3 ist mit dem Flotationsbehälter 11 in der Weise verbunden, daß die seitliche Wand 14 an dieser Stelle unterbrochen ist, so daß das Einströmen der zugeführten Suspension möglich ist. Zu Einstellungszwecken ist an dieser Stelle ein Abdeckblech 15 denkbar, das z.B. in Umfangsrichtung an der zylindrischen Wand 14 beweglich ist und den Übergangsquerschnitt zwischen Kammer 3 und Flotationsbehälter 11 verändern kann. Eine Schlammsammeleinrichtung 16 dient der Abfuhr des durch die Flotation an der Oberfläche gebildeten Schaumes oder Schwimm-Schlammes und der Förderung in Richtung Schlammtrichter 17. Der Abtransport des Flotationsschaumes läßt sich besonders gut durchführen, wenn die Schlammsammeleinrichtung 16 in Umfangsrichtung um die Mitte des Flotationsbehälters bewegt werden kann. Dabei stützt sie sich zentral sowie auf der seitlichen Wand des Flotationsbehälters ab. Die Umlaufbewegung erfolgt durch einen Antrieb 18. Bei dem hier dargestellten Konzept der Schlammabfuhr zur Mitte des Flotationsbehälters hin wird üblicherweise in der Schlammsammeleinrichtung 16, wenn auch nicht gezeichnet, eine Transportvorrichtung vorgesehen sein, die den gesammelten Schlamm horizontal radial nach innen fördert.

Die Fig. 5 zeigt einen Schnitt durch die in Fig. 4 gezeigte Flotationsvorrichtung unter Weglassung der Schlammsammeleinrichtung. Am linken Rand erkennt man einen Teil der Kammer 3 mit dem Suspensionseinlauf 19 von unten. Ebenso ist ein Strömungsgleichrichter 12 angedeutet. Der an der Oberfläche gebildete und zur Mitte transportierte Schlamm kann über den Schlammtrichter 17 abgeführt werden, wobei das Schlammablaufrohr 20 etwas exzentrisch so geführt ist, daß der Klarwasserablauf 21 zentral im Boden des Flotationsbehälters 11 sitzt. Ferner sieht man den Schwerteil- und Sinkschlammabzug 22.

In Verbindung mit dem Schlammtrichter 17 wird in der Regel ein Wehr 24 vorhanden sein, das die Grenze zwischen Suspension und Schaum oder Schlamm definiert. An dem Schlammtrichter 17 kann unterhalb des Wasserspiegels außerdem eine sich über den Umfang oder einen Teil davon erstreckende Abdeckung 25 befestigt sein, mit deren Hilfe das Aufsteigen von bereits gereinigtem Wasser im Bereich des Wehres oder das Absinken von Schlamm in den Klarwasserbereich verhindert wird.

Es ist weiterhin möglich, durch ein zusätzliches Wasserabzugsrohr 26 Klarwasser in anderer Qualität als aus dem Abzugsrohr 21 abzuführen.

Zur Verbesserung der Wirkung der Flotationsvorrichtung, aber nicht unbedingt erforderlich, sind weitere Möglichkeiten eingezeichnet. Ein Siebblech 23 - hier ringförmig um den Klarwasserablauf 21 gelegt - kann gegebenenfalls den gleichförmigen Abzug von Klarwasser verbessern. Dieses Siebblech kann sich auf einen Teil der Suspensionshöhe beschränken oder den gesamten Klarwasserabzugsraum begrenzen.Es muß keine runden Öffnungen haben. Es können, wie hier gezeichnet ist, mit Vorzug senkrechtstehende Schlitze sein.

Fig. 6 zeigt als Ausschnitt ein kreiszylinderförmiges Siebblech 23', das sich über die ganze Höhe des Wasserstandes erstreckt. Die Öffnungen können Löcher oder Schlitze oder eine Kombination von beiden sein. Sie können auch, in Umfangsrichtung gesehen, Zonen verschiedener Öffnungen bilden, z.B. am Einlauf der Kammer 3 geschlossen sein, um unerwünschten Abzug von Wasser an dieser Stelle zu verhindern.

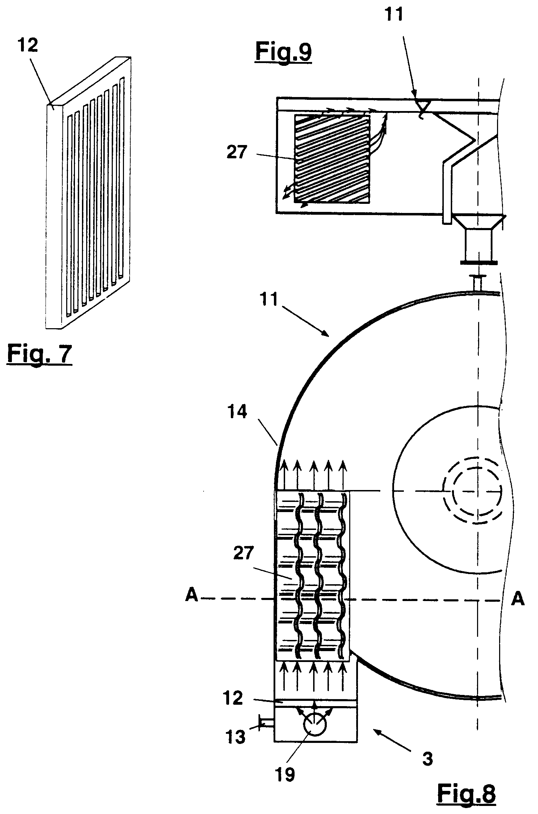

Fig. 7 zeigt eine perspektivische Skizze eines möglichen Strömungsgleichrichters 12. Durch eine Anzahl von senkrechten Schlitzen kann sich die Strömung auf der ganzen Höhe und Breite der Kammer gleichmäßig ausbilden.

Das in Fig. 8 gezeigte Lamellenmodul besteht aus einer Mehrzahl von quer zur Strömungsrichtung geneigten und gewellten Blechen 27 und erstreckt sich im wesentlichen über den Strömungsquerschnitt am Übergang von Kammer 3 und Klärraum 1. Ein Schnitt an der Linie A ... A durch das aus den Blechen 27 bestehende Lamellenmodul zeigt Fig. 9. Die Abtrennung von nicht klebenden, meist anorganischen Feststoffen kann nämlich in besonderen Fällen dadurch weiter verbessert werden, daß sich im Anschluß an den Einlaufkanal 3 zwischen wellenförmigen Blechen 27 bereits nach kurzer Steig- bzw. Sinkbewegung die auszuscheidenden Stoffe aufkonzentrieren lassen. So bildet sich ein Vielzahl von Kanälen aus, in denen infolge von deren Querneigung die Schlämme quer auf- bzw. abfließen können (Fig.9: exemplarische Pfeile auf- bzw. abwärts) und das teilgeklärte Wasser weiter der Hauptströmung folgt. Vorausetzung ist allerdings, daß die Stoffe nicht zum Kleben oder Verstopfen neigen. Die Darstellungen in den Figuren sind nur skizzenhaft, eine strömungstechnische Optimierung kann konkret zu sehr unterschiedlichen Lösungen, je nach Anforderungen an dieses Modul, führen.

## Patentansprüche

1. Verfahren zur Abtrennung von Feststoffen aus einer Suspension (S) in einem im wesentlichen runden Klärraum (1) zur Aufnahme der zu klärenden Suspension, wobei an der Oberfläche der Suspension Schwimm-Schlamm gebildet und abgeführt wird, der durch Flotation die zu entfernenden Feststoffe aufnimmt und wobei eine Ableitung des gereinigten Wassers aus dem Klärraum (1) erfolgt,
**dadurch gekennzeichnet**,
daß die zu klärende Suspension (S) tangential am Umfang des Klärraumes (1) eingeführt wird, daß unerwünschte hydraulische Impulse der Suspensionszuführung durch strömungstechnische Mittel (2) bereits vor dem Eintritt in den Klärraum (1) in einer Kammer (3) gedämpft werden und daß die Strömung sich auf einem im wesentlichen spiralförmigen Weg (4) zum Zentrum des Klärraumes (1) bewegt und sich dabei beschleunigt.

2. Verfahren nach Anspruch 1,
**dadurch gekennzeichnet**,
daß der Klärraum eine im wesentlichen kreisrunde Bodenfläche aufweist.

3. Verfahren nach Anspruch 1,
**dadurch gekennzeichnet**,
daß der Klärraum eine Bodenfläche mit einer im wesentlichen spiralförmigen Außenwand aufweist.

4. Verfahren nach Anspruch 1, 2 oder 3,
**dadurch gekennzeichnet**,
daß die strömungstechnischen Mittel (2) die Strömungsgeschwindigkeit der Suspension vor dem Eintritt in den Klärraum (1) in ihrem ganzen Strömungsquerschnitt weitgehend bezüglich der Richtung gleichrichten.

5. Verfahren nach Anspruch 4,
**dadurch gekennzeichnet**,
daß die strömungstechnischen Mittel die Strömungsgeschwindigkeit der Suspension vor dem Eintritt in den Klärraum (1) in ihrem ganzen Strömungsquerschnitt auch bezüglich des Betrages weitgehend angleichen.

6. Verfahren nach Anspruch 1, 2 oder 3,
**dadurch gekennzeichnet**,
daß die Einströmgeschwindigkeit an der tangentialen Einleitung der Suspension in den Klärraum etwa 0,1 bis 0,5 m/s beträgt.

7. Verfahren nach Anspruch 1, 2 oder 3,
**dadurch gekennzeichnet**,
daß die Beschleunigung auf dem im wesentlichen spiralförmigen Weg (4) der Strömung etwa 0,1-2 mm/s² beträgt.

8. Verfahren nach Anspruch 1,
**dadurch gekennzeichnet**,
daß der an der Oberfläche der Suspension gebildete Schwimm-Schlamm in wählbaren Zeitabständen zur Mitte des Klärraumes transportiert wird, von wo er abgeleitet wird.

9. Verfahren nach Anspruch 8,
**dadurch gekennzeichnet**,
daß der Transport zur Mitte durch ein sich im wesentlichen radial erstreckendes, in Umfangsrichtung des Klärraumes bewegbares Schlammabführelement erfolgt.

10. Verfahren nach Anspruch 1,
**dadurch gekennzeichnet**,
daß die zugeführte Suspension Luft in gelöster Form enthält, welche nach Austritt aus der sie transportierenden Rohrleitung durch Entspannung in kleinen Luftbläschen frei wird und daß die Luftbläschen eine Flotation der suspendierten Teilchen herbeiführen.

11. Verfahren nach Anspruch 10,
**dadurch gekennzeichnet**,
daß die zu lösende Luft der zu klärenden Suspension unter Druck zugeführt wird.

12. Verfahren nach Anspruch 10,
**dadurch gekennzeichnet**,
daß zur Flotation die Luft benutzt wird, die infolge eines vorangegangenen Verfahrensschrittes bereits in der zugeführten Suspension enthalten ist.

13. Verfahren nach Anspruch 1,
**dadurch gekennzeichnet**,
daß die Flotation durch zugegebene Chemikalien unterstützt wird.

14. Verfahren nach Anspruch 1,
**dadurch gekennzeichnet**,
daß Klarwässer unterschiedlicher Qualität getrennt abgeleitet werden.

15. Verfahren nach Anspruch 1,
**dadurch gekennzeichnet**,
daß abgesunkene Feststoffe oder Sinkschlamm im Bereich des Klärraumbodens gesammelt und von dort abgeführt werden.

16. Verfahren nach Anspruch 1,
**dadurch gekennzeichnet**,
daß im zentralen Bereich des Klärraumes eine Trombenströmung erzeugt wird, die Feststoffpartikel aus der Grenzschicht zwischen Suspension und Flotationsschaum in Richtung zum Zentrum des Klärraumes transportiert.

17. Verfahren nach Anspruch 16,
**dadurch gekennzeichnet**,
daß Feststoffpartikel aus der Grenzschicht über dem Klärbeckenboden durch ein infolge einer Trombe erzeugtes Druckgefälle in Richtung Zentrum transportiert werden.

18. Flotationsvorrichtung zur Durchführung des Verfahrens nach Anspruch 1 mit einem Flotationsbehälter (11), dessen seitliche Außenwand (14) im wesentlichen die Form eines Rotationszylinders hat, mit einer Zuführungseinrichtung für die zu klärende Suspension, mit einer zentralen Ablaufleitung (21) für das geklärte Wasser, mit einer Vorrichtung (16) zur Abfuhr des sich durch Flotation an der Oberfläche der Suspension bildenden Schwimm-Schlammes,
**dadurch gekennzeichnet**,
daß die Zuführungseinrichtung eine tangential außen am Flotationsbehälter angebrachte Kammer (3) aufweist und daß in dieser Kammer (3) mindestens ein Strömungsgleichrichter (12, 12') angebracht ist, der über den gesamten Strömungsquerschnitt wirksam ist.

19. Flotationsvorrichtung nach Anspruch 18,
**dadurch gekennzeichnet**,
daß die seitliche Außenwand (14') spiralförmig ausgebildet ist.

20. Flotationsvorrichtung nach Anspruch 18,
**dadurch gekennzeichnet**,
daß der mindestens eine Strömungsgleichrichter (12, 12') als Strömungsgitter in Form einer über den Querschnitt sich erstreckenden, mit Öffnungen versehenen Wand ausgebildet ist.

21. Flotationsvorrichtung nach Anspruch 18,
**dadurch gekennzeichnet**,
daß mit Hilfe eines Abdeckbleches (15) der Übergangsquerschnitt zwischen der Kammer (3) und dem Flotationsbehälter (11) reguliert werden kann.

22. Flotationsvorrichtung nach Anspruch 18,
**dadurch gekennzeichnet**,
daß die Suspension im Anschluß an die Kammer (3) durch eine Anzahl von quer zur Strömungsrichtung gesehen geneigten, mit Abstand voneinander und im wesentlichen parallel liegenden Blechen (27) geführt wird, die eine solche Form aufweisen, daß sich Kanäle oder Nuten bilden, in denen sich Einzelströme quer zur Hautströmung aufwärts und/oder abwärts ausbilden können, wobei diese Einzelströmungen mit Schwimm- bzw. Sinkschlamm angereichert sind.

23. Flotationsvorrichtung nach Anspruch 22,
**dadurch gekennzeichnet**,
daß die Bleche (27) eine quer zur Hauptströmungsrichtung wellige Form haben und zu einem Lamellen-Modul zusammengefaßt sind.

24. Flotationsvorrichtung nach Anspruch 18,
**dadurch gekennzeichnet**,
daß der Schwimm-Schlamm an der Oberfläche der Suspension durch eine Schlammsammeleinrichtung (16), die so bewegbar ist, daß sie im wesentlichen die gesamte Oberfläche der Suspension erfassen kann, zur Mitte des Flotationsbehälters transportierbar ist.

25. Flotationsvorrichtung nach Anspruch 24,
**dadurch gekennzeichnet**,
daß die Schlammsammeleinrichtung (16) sich im wesentlichen radial über den Flotationsbehälter (11) erstreckt und in Umfangsrichtung umlaufend bewegbar ist.

26. Flotationsvorrichtung nach Anspruch 18,
**dadurch gekennzeichnet**,
daß das geklärte Wasser durch einen unten und im mittleren Bereich des Flotationsbehälters (11) liegenden Klarwasserablauf (21) entnommen werden kann.

27. Flotationsvorrichtung nach Anspruch 18,
**dadurch gekennzeichnet**,
daß der gesammelte Schwimm-Schlamm durch einen Schlammtrichter (17) und ein sich anschließendes Schlammabzugsrohr (20) aus dem mittleren Bereich des Flotationsbehälters (11) abgeführt werden kann.

28. Flotationsvorrichtung nach Anspruch 18,
**dadurch gekennzeichnet**,
daß der gesammelte Schwimm-Schlamm durch einen Schlammtrichter (17) und nach oben über einen Drehkopf aus dem mittleren Bereich des Flotationsbehälters (11) abgeführt werden kann.

29. Flotationsvorrichtung nach Anspruch 18,
**dadurch gekennzeichnet**,
daß mit Hilfe eines einstellbaren Wehres (24) eine Trennung von Schlamm und noch nicht ausreichend geklärter Suspension erfolgt.

30. Flotationsvorrichtung nach Anspruch 18,
**dadurch gekennzeichnet**,
daß unterhalb des Suspensionsspiegels eine Abdeckung (25) vorhanden ist, mit deren Hilfe das Aufsteigen von bereits gereinigtem Wasser oder das Absinken von Schwimm-Schlamm zumindest teilweise verhindert wird.

31. Flotationsvorrichtung nach Anspruch 18,
**dadurch gekennzeichnet**,
daß zusätzlich zum Klarwasserablauf (21) mindestens ein weiteres Wasserabzugsrohr (26) vorhanden ist, welches aus einem anderen Bereich Klarwasser in anderer Qualität abführen kann.

## Claims

1. A method for the separation of solids from a suspension (S) in a substantially round clarifying chamber (1) to receive the suspension which is to be clarified, in which floating slurry is formed on the surface of the suspension and is removed, which receives through flotation the solids which are to be removed, and in which a conducting takes place of the purified water out of the clarifying chamber (1),
characterised in that
the suspension (S) which is to be clarified is introduced tangentially at the periphery of the clarifying chamber (1), that undesired hydraulic impulses of the suspension supply are damped in a chamber (3) by flow technology means (2) already prior to entry into the clarifying chamber (1) and that the flow moves on a substantially spiral path (4) to the centre of the clarifying chamber (1) and, in so doing, accelerates.

2. A method according to Claim 1,
characterised in that
the clarifying chamber has a substantially circular base surface.

3. A method according to Claim 1,
characterised in that
the clarifying chamber has a base surface with a substantially spiral-shaped outer wall.

4. A method according to Claim 1, 2 or 3,
characterised in that
the flow technology means (2) rectify the speed of flow of the suspension prior to entry into the clarifying chamber (1) in its entire flow cross-section largely with respect to direction.

5. A method according to Claim 4,
characterised in that
the flow technology means also largely correct the speed of flow of the suspension prior to entry into the clarifying chamber (1) in its entire flow cross-section with respect to the amount.

6. A method according to Claim 1, 2 or 3,
characterised in that
the inflow speed at the tangential introduction of the suspension into the clarifying chamber amounts to approximately 0.1 to 0.4 m/s.

7. A method according to Claim 1, 2 or 3,
characterised in that
the acceleration on the substantially spiral path (4) of the flow amounts to approximately 0.1-2 mm/s².

8. A method according to Claim 1,
characterised in that
the floating slurry formed on the surface of the suspension is transported at selectable intervals of time to the centre of the clarifying chamber, from where it is drawn off.

9. A method according to Claim 8,
characterised in that
the transporting to the centre takes place by a slurry removal element extending substantially radially and able to be moved in circumferential direction of the clarifying chamber.

10. A method according to Claim 1,
characterised in that
the supplied suspension contains air in dissolved form which, after emerging from the pipeline which transports it, is released through expansion in small air bubbles and that the air bubbles bring about a flotation of the suspended particles.

11. A method according to Claim 10,
characterised in that
the air to be dissolved is supplied under pressure to the suspension which is to be clarified.

12. A method according to Claim 10,
characterised in that
for flotation, the air is used which is already contained in the supplied suspension as a result of a previous process step.

13. A method according to Claim 1,
characterised in that
the flotation is assisted by added chemicals.

14. A method according to Claim 1,
characterised in that
clean waters of differing quality are drawn off separately.

15. A method according to Claim 1,
characterised in that
the sunken solids or sunken slurry are collected in the region of the base of the clarifying chamber and are removed from there.

16. A method according to Claim 1,
characterised in that
in the central region of the clarifying chamber a cone flow is produced which transports solid particles from the marginal layer between suspension and flotation slurry towards the centre of the clarifying chamber.

17. A method according to Claim 16,
characterised in that
solid particles are transported towards the centre from the marginal layer over the base of the clarifying basin by a pressure drop produced as a result of a cone.

18. A flotation device to carry out the method according to Claim 1 with a flotation vessel (11), the lateral outer wall (14) of which has substantially the form of a rotation cyclinder, with a feeding device for the suspension which is to be clarified, with a central outlet duct (21) for the clarified water, with a device (16) for the removal of the floating slurry forming by flotation on the surface of the suspension,
characterised in that
the feeding device has a chamber (3) arranged tangentially externally on the flotation vessel and that in this chamber (3) at least one flow rectifier (12, 12') is arranged, which is effective over the entire flow cross-section.

19. A flotation device according to Claim 18,
characterised in that
the lateral outer wall (14') is constructed in a spiral shape.

20. A flotation device according to Claim 18,
characterised in that
the at least one flow rectifier (12,12') is constructed as a flow grid in the form of a wall extending over the cross-section, provided with openings.

21. A flotation device according to Claim 18,
characterised in that
by means of a cover plate (15) the transition cross-section between the chamber (3) and the flotation vessel (11) can be regulated.

22. A flotation device according to Claim 18,
characterised in that
the suspension adjoining the chamber (3) is guided by a number of plates (27) which are inclined when viewed transversely to the direction of flow and are spaced apart from each other and lie substantially parallel, which plates (27) have a shape such that channels or grooves form in which individual currents can form, transversely to the main flow, upwards and/or downwards, in which these individual currents are enriched with floating or sunken slurry.

23. A flotation device according to Claim 22,
characterised in that
the plates (27) have an undulating shape transversely to the main direction of flow and are combined into a laminated module.

24. A flotation device according to Claim 18,
characterised in that
the floating slurry on the surface of the suspension is able to be transported to the centre of the flotation vessel by a slurry collection device (16), which is able to be moved so that it can cover substantially the entire surface of the suspension.

25. A flotation device according to Claim 24,
characterised in that
the slurry collecting device (16) extends substantially radially over the flotation vessel (11) and is movable in a circulating manner in circumferential direction.

26. A flotation device according to Claim 18,
characterised in that
the clarified water can be removed through a clean water outlet (21) lying at the bottom and in the central region of the flotation vessel (11).

27. A flotation device according to Claim 18,
characterised in that
the collected floating slurry can be removed through a collecting funnel (17) and an adjoining slurry extraction pipe (20) from the central region of the flotation vessel (11).

28. A flotation device according to Claim 18,
characterised in that
the collected floating slurry can be removed through a slurry funnel (17) and upwards via a rotary head from the central region of the flotation vessel (11).

29. A flotation device according to Claim 18,
characterised in that
by means of an adjustable dam (24) a separation takes place of slurry and suspension which is not yet sufficiently clarified.

30. A flotation device according to Claim 18,
characterised in that
beneath the suspension level a cover (25) is present, by means of which the rising of already purified water or the sinking of floating slurry is at least partially prevented.

31. A flotation device according to Claim 18,
characterised in that
in addition to the clean water outlet (21) at least one further water extraction pipe (26) is present, which can remove clean water of a different quality from a different region.

## Revendications

1. Procédé de séparation de matières solides d'une suspension (S) dans un décanteur (1) essentiellement rond destiné à recevoir la suspension à décanter, à la surface de la suspension étant formée et évacuée de la boue flottante, qui par flottation absorbe les matières solides à éliminer et une évacuation de l'eau épurée à partir du décanteur (1) s'effectuant, caractérisé en ce que la suspension (S) à décanter est introduite tangentiellement sur le pourtour du décanteur (1), en ce que des impulsions hydrauliques indésirables de l'alimentation de la suspension sont amorties par des moyens (2) de technique d'écoulement, dès avant l'entrée dans le décanteur (1), dans une chambre (3) et en ce que l'écoulement se déplace sur un parcours (4) essentiellement en spirale vers le centre du décanteur (1) et ce faisant s'accélère.

2. Procédé selon la revendication 1, caractérisé en ce que le décanteur présente une surface de fond essentiellement circulaire.

3. Procédé selon la revendication 1, caractérisé en ce que le décanteur présente une surface de fond avec une paroi extérieure essentiellement en spirale.

4. Procédé selon la revendication 1, 2 ou 3, caractérisé en ce que les moyens (2) de technique d'écoulement redressent largement la vitesse d'écoulement de la suspension avant l'entrée dans le décanteur (1), dans toute sa section transversale d'écoulement, en ce qui concerne la direction.

5. Procédé selon la revendication 4, caractérisé en ce que les moyens de technique d'écoulement égalisent largement la vitesse d'écoulement de la suspension avant l'entrée dans le décanteur (1), dans toute sa section transversale d'écoulement, y compris en ce qui concerne la valeur.

6. Procédé selon la revendication 1, 2 ou 3, caractérisé en ce que la vitesse d'arrivée à l'entrée tangentielle de la suspension dans le décanteur, est comprise entre 0,1 et 0,5 m/s.

7. Procédé selon la revendication 1, 2 ou 3, caractérisé en ce que l'accélération sur le parcours (4) essentiellement en spirale de l'écoulement est de 0,1 à 2 mm/s² environ.

8. Procédé selon la revendication 1, caractérisé en ce que la boue flottante formée à la surface de la suspension est transportée à intervalles de temps sélectionnables vers le milieu du décanteur, d'où elle est évacuée.

9. Procédé selon la revendication 8, caractérisé en ce que le transport vers le milieu s'effectue par un élément d'évacuation de boue s'étendant sensiblement radialement, déplaçable dans la direction périphérique du décanteur.

10. Procédé selon la revendication 1, caractérisé en ce que la suspension alimentée contient de l'air sous forme dissoute, qui après sortie de la tuyauterie la transportant, est libéré par détente en petites bulles d'air, et en ce que les bulles d'air provoquent une flottation des particules en suspension.

11. Procédé selon la revendication 10, caractérisé en ce que l'air à dissoudre est envoyé sous pression à la suspension à décanter.

12. Procédé selon la revendication 10, caractérisé en ce que pour la flottation on utilise l'air qui par suite d'une étape de procédé précédente est déjà contenu dans la suspension alimentée.

13. Procédé selon la revendication 1, caractérisé en ce que la flottation est favorisée par l'ajout de produits chimiques.

14. Procédé selon la revendication 1, caractérisé en ce que des eaux clarifiées de qualité différente peuvent être évacuées séparément.

15. Procédé selon la revendication 1, caractérisé en ce que des matières solides sédimentées ou de la boue de sédimentation sont recueillies dans la zone du fond du décanteur et sont évacuées à partir de là.

16. Procédé selon la revendication 1, caractérisé en ce que dans la zone centrale du décanteur il est produit un écoulement en trombe, qui transporte les particules solides à partir de la couche limite entre la suspension et la mousse de flottation, en direction du centre du décanteur.

17. Procédé selon la revendication 16, caractérisé en ce que des particules solides sont transportées à partir de la couche limite, sur le fond du bassin de décantation, par une chute de pression produite à la suite d'une trombe, en direction du centre.

18. Disposition de flottation pour la mise en oeuvre du procédé selon la revendication 1, comportant un récipient de flottation (11) dont la paroi extérieure latérale (14) a essentiellement la force d'un cylindre de rotation, un dispositif d'alimentation pour la suspension à décanter, une conduite d'évacuation centrale (21) pour l'eau clarifiée, et un dispositif (16) pour l'évacuation de la boue flottante se formant par flottation à la surface de la suspension, caractérisé en ce que le dispositif d'alimentation comporte une chambre (3) placée tangentiellement à l'extérieur sur le récipient de flottation et en ce que dans cette chambre (3) est placé au moins un redresseur d'écoulement (12, 12'), qui opère sur toute la section transversale d'écoulement.

19. Dispositif de flottation selon la revendication 18, caractérisé en ce que la paroi extérieure latérale (14') est en forme de spirale.

20. Dispositif de flottation selon la revendication 18, caractérisé en ce que le au moins un redresseur d'écoulement (12, 12') est conformé en grille d'écoulement sous la forme d'une paroi pourvue d'ouvertures s'étendant sur la section transversale.

21. Dispositif de flottation selon la revendication 18, caractérisé en ce qu'à l'aide d'une tôle de couverture (15), la section transversale de transition entre la chambre (3) et le récipient de flottation (11) peut être réglée.

22. Dispositif de flottation selon la revendication 18, caractérisé en ce qu'à la suite de la chambre (3), la suspension est guidée par un nombre de tôles (27) inclinées, vues transversalement à la direction d'écoulement, espacées l'une de l'autre et sensiblement parallèles, qui présentent une forme telle qu'elles forment des canaux ou des rainures dans lesquels peuvent se former des courants individuels montant et/ou descendant transversalement à l'écoulement principal, ces courants individuels étant enrichis en boue flottante ou boue de sédimentation.

23. Dispositif de flottation selon la revendication 22, caractérisé en ce que les tôles (27) ont une forme ondulée transversalement à la direction principale d'écoulement et sont réunies en un module à lamelles.

24. Dispositif de flottation selon la revendication 18, caractérisé en ce que la boue flottante peut être transportée vers le milieu du récipient de flottation, à la surface de la suspension, par un dispositif de collecte de boue (16), qui est déplaçable de manière qu'il puisse concerner pratiquement toute la surface de la suspension.

25. Dispositif de flottation selon la revendication 24, caractérisé en ce que le dispositif de collecte de boue (16) s'étend essentiellement radialement sur le récipient de flottation (11) et est déplaçable tout autour dans la direction périphérique.

26. Dispositif de flottation selon la revendication 18, caractérisé en ce que l'eau clarifiée peut être prélevée par une évacuation d'eau clarifiée (2) située en bas et dans la zone centrale du récipient de flottation (11).

27. Dispositif de flottation selon la revendication 18, caractérisé en ce que la boue flottante recueillie peut être évacuée par un cône à boue (17) et un tube d'extraction de boue (20) se raccordant, à partir de la zone centrale du récipient de flottation (11).

28. Dispositif de flottation selon la revendication 18, caractérisé en ce que la boue flottante recueillie peut être évacuée par un cône à boue (17) et vers le haut par une tête tournante, à partir de la zone centrale du récipient de flottation (11).

29. Dispositif de flottation selon la revendication 18, caractérisé en ce qu'à l'aide d'an barrage réglable (24) il est procédé à une séparation de la boue et de la suspension non encore suffisamment clarifiée.

30. Dispositif de flottation selon la revendication 18, caractérisé en ce qu'au-dessous du niveau de la suspension il est prévu une couverture (25) à l'aide de laquelle on empêche au moins partiellement la montée de l'eau déjà épurée ou la retombée de la boue flottante.

31. Dispositif de flottation selon la revendication 18, caractérisé en ce qu'en supplément à l'évacuation d'eau clarifiée (21) il est prévu au moins un autre tube d'extraction d'eau (26), qui peut évacuer de l'eau clarifiée d'une autre zone, dans une autre qualité.
